Europäisches Patentamt

**(19)** European Patent Office

Office européen des brevets

**(11)** Publication number: **0 338 075**

**A1**

**(12)** # EUROPEAN PATENT APPLICATION

published in accordance with Art. 158(3) EPC

**(21)** Application number: **87905289.2**

**(22)** Date of filing: **14.08.87**

Data of the international application taken as a basis:

**(86)** International application number: **PCT/JP87/00608**

**(87)** International publication number: **WO88/04871 (30.06.88 88/14)**

**(51)** Int. Cl.³: **H 04 M 11/00**
**H 04 M 11/06, G 08 C 21/00**

**(30)** Priority: **15.12.86 JP 297971/86**
**15.12.86 JP 297977/86**

**(43)** Date of publication of application:
**25.10.89 Bulletin 89/43**

**(84)** Designated Contracting States:
**CH DE FR GB IT LI NL SE**

**(71)** Applicant: **KABUSHIKI KAISHA KOMATSU SEISAKUSHO**
**3-6, Akasaka 2-chome**
**Minato-ku Tokyo 107(JP)**

**(72)** Inventor: **TAKITANI, Yukitaka**
**8-7-6, Higashi-Rinkan Sagamihara-shi**
**Kanagawa-ken 228(JP)**

**(72)** Inventor: **IMAIZUMI, Hisaakira**
**204-2, Nagamochi Hiratsuka-shi**
**Kanagawa-ken 259-12(JP)**

**(72)** Inventor: **TORIHATA, Shigenori**
**920, Itado, Isehara-shi**
**Kanagawa-ken 259-11(JP)**

**(72)** Inventor: **HAYAKAWA, Shunichi**
**3-24-11, Nozawa Setagaya-ku**
**Tokyo 154(JP)**

**(72)** Inventor: **FUTATSUKA, Nobuyuki**
**8-11, Hiratsuka 4-chome Hiratsuka-shi**
**Kanagawa-ken 254(JP)**

**(72)** Inventor: **SATO, Masahiro**
**18, Manda**
**Hiratsuka-shi Kanagawa-ken 254(JP)**

**(74)** Representative: **Selting, Günther, Dipl.-Ing. et al,**
**Patentanwälte von Kreisler, Selting, Werner**
**Deichmannhaus am Hauptbahnhof**
**D-5000 Köln 1(DE)**

**(54)** TALKING DEVICE.

**(57)** The talking device has an ordinary handset (1) as well as an input/output panel (10) which is constituted by placing a flat plate-like liquid crystal display unit (200) on a two-dimensional semiconductor optical position detector (100). In response to operation for designating a position upon the input/output panel (10) through a light pen (20), the device attains such functions as registering the names and telephone numbers of other persons, dialing or automatic dialing, image data communication accompanying the voice data, timepiece setting, and similar functions.

EP 0 338 075 A1

./...

FIG.1

SPECIFICATION       **TITLE MODIFIED**
**see front page**

CONVERSATION APPARATUS

Technical Field

This invention relates to a conversation apparatus which has an automatic dialing function and which can simultaneously communicate even image information, such as characters, figures and the like, together with a voice.

Background Art

In place of conventional popular telephones used only for communication of voice, there have recently been proposed and developed conversation apparatus which can communicate even image information, such as characters, figures and the like, together with a voice, as described above.

According to an invention disclosed, for example, in Japanese Patent Public Disclosure (Kokai) No. 61-66459 (1986) entitled "a telephone having a touch panel", information, such as figures and the like, which is input by hand writing via a transparent digitizer and voice information which is input via a normal handset are switched and transmitted to a communication network (telephone circuit) via an

1

appropriate communication changeover switch. According to an invention disclosed in Japanese Patent Public Disclosure (Kokai) No. 61-28198 (1986) entitled "a pattern-transferring telephone apparatus", information, such as figures and the like, which is input via a transparent electrode, a pressure-sensitive rubber, an air-gapped contact plate or the like disposed in the form of a matrix is sent out to a telephone circuit together with voice information which is input via a normal handset.

In such conversation apparatus which can also communicate image information, such as characters, figures and the like, structures and functions of display means (omitted in the above explanation) for displaying such image information as well as input means for inputting the image information become important in discussing merits or demerits of such conversation apparatus.

The above-described image-information input means of conversation apparatus of the prior art will be now considered. In the former apparatus using a transparent digitizer as its input means, the transparent digitizer itself is expensive, small in its structure and difficult to be made thin (almost all of transparent digitizers are of matrix type utilizing an electromagnetic induction phenomenon). Hence, the apparatus also becomes high in its cost, and it is difficult to reduce its size. In the latter

2

apparatus using a matrix-type transparent electrode, a pressure-sensitive rubber, an air-gapped contact plate or the like as its input means, since all the input means are of pressure-sensitive type which detects pressure, their operation is troublesome. Hence, a misoperation might easily occur. Furthermore, in the latter apparatus, a problem is also left in mechanical durability. There is also a problem that it is hard to observe a display unit due to the reflection of light by the transparent electrode surface.

The present invention intends to improve such conversation apparatus, particularly the above-described image-information input means thereof by dissolving various inconvenience as described above, and further improve fuctions and operationability of the conversation apparatus.

Disclosure of the Invention

In the present invention, as the above-described information input means, tablet-type input means is used, in which a spot light emitted from a light pen is made a medium, and a predetermined information is input according to irradiation of the spot light on a plate-like light-receiving surface, that is, according to the detection of light position. After the information which is thus input has been converted into a predetermined electric signal cor-

3

responding to the information, this signal and the above-described voice signal are appropriately mixed so that they can be identified, and the resultant signal is transmitted to a communication network.

It is thereby possible to simultaneously communicate image information, such as characters, figures and the like, together with a voice, and the above-described input means itself can easily be configured small and thin and is also excellent in durability and mass-productivity. Furthermore, it is unnecessary to apply a force when inputting information and so misoperation and the like hardly occur. Hence, a conversation apparatus itself also becomes relatively small and excellent in functions and operationability.

It is to be noted that information which is input via the above-described input means is not limited to the above-described image information, but is arbitrary. It may, for example, be a numerical value which is appropriately made correspond to an irradiated position of the above-described light spot, or other identifying information.

In this case, by providing, for example, memory means in which the names of plural correspondents and their telephone numbers are registered in a corresponding relationship, and automatic dialing means for selecting a predetermined telephone number among data registered in the memory means and performing automatic dialing of the

4

selected telephone number according to irradiated-position information of the above-described spot light, entry of correspondents into the memory means and automatic dialing to the entered corespondents and the like become possible via the above-described input means. In this case, if plate-like display means disposed overlapped on the input means is also provided to guide and display an occasional input position and input content thereon, such input operation becomes extremely easy. A display means which is thus provided can, of course, be also used as an image monitor for image information which is input via the above-described input means or image information which is transmitted from a correspondent. Furthermore, when characters or figures are sent as described above, if connected to a general-purpose computer having data base and the like via a telephone circuit, the display means can also be utilized as a data terminal which can perform a simple retrieval and the like.

## Brief Description of the Drawings

FIG. 1 is a block diagram showing an embodiment of a conversation apparatus according to the present invention;

FIG. 2 is a perspective view showing an appearance configuration of the conversation apparatus of the embodiment;

FIGS. 3, 4, 5 and 6 are diagrams showing examples of display pictures in operation, respectively;

FIG. 7 is a partially cutaway view in perspective showing an outline of the structure of an input/output panel used in the apparatus of the embodiment;

FIG. 8 is a schematic diagram showing an aspect of light irradiation on the input/output panel by a light pen;

FIG. 9 is a perspective view showing a configuration of a light-position detector;

FIG. 10 is a partially enlarged view showing a configuration of a photoelectric conversion layer shown in FIG. 9;

FIGS. 11(a), 11(b) and 11(c) are schematic diagrams showing fuctions of the above-described light-position detector, respectively;

FIG. 12 is an enlarged partial cross-sectional view showing the configuration of a light pen;

FIG. 13 is a block diagram showing an example of a position detection circuit disposed within a position-signal processing unit; and

FIGS. 14 and 15 are diagrams showing modified examples of the present invention, respectively.

Best Mode for Carrying Out the Invention

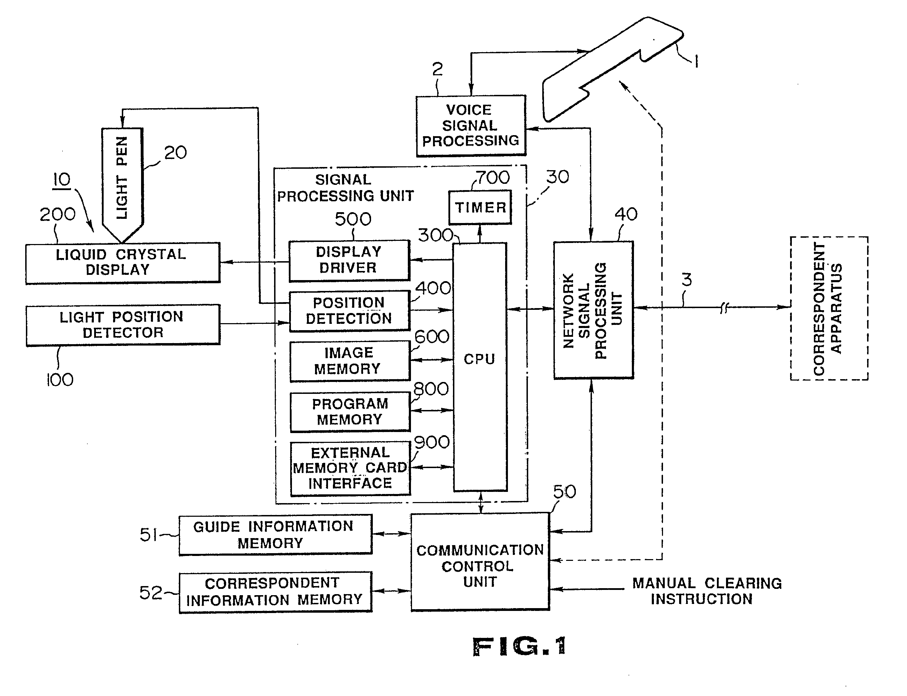

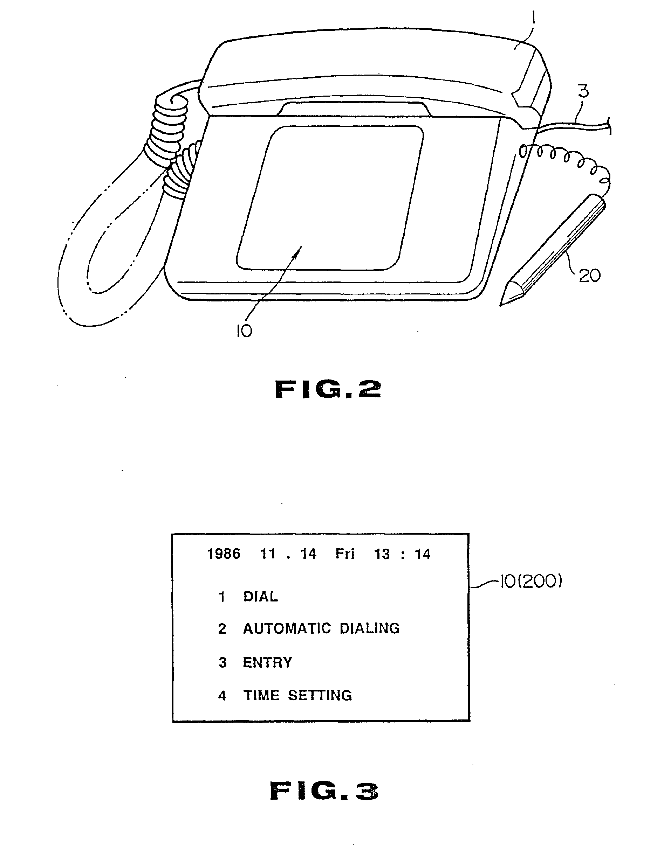

FIG. 1 shows the configuration of an embodiment of a conversation apparatus according to the present invention, and FIG. 2 shows an appearance of the conversation apparatus of the embodiment.

That is, as shown in FIG. 2, the conversation apparatus of the embodiment comprises, in gross, a handset 1 for performing conversation with a correspondent, an input/output panel 10 which is used for inputting image information, such as characters, figures and the like, and numerical information relative to the telephone number of a desired correspondent, selection numbers in accordance with a predetermined sequence and the like, and which displays the input information and guidance information relative to the above-described sequence in a predetermined way, and a light pen 20 which incorporates a proper light source and instructs an occasional input content irradiating a spot light emitted from the light source on the surface of the panel when each of the above-described information is input via the input/output panel 10. The concrete configuration, each of functions, the method of operation and the like of the conversation apparatus of the embodiment will be hereinafter described in detail with reference to FIG. 1.

First, as shown in FIG. 1, the above-described input/output panel 10 comprises a semiconductive light-position detector (simply termed hereinafter light-position detector) 100 which includes a plate-like light-receiving

7

surface, and a dot-display-type liquid crystal display unit 200 which has a display surface having an identical size as that of the light-receiving surface of the light-position detector 100 and is disposed so that it is ovelapped on the light-receiving surface. As is well known, the liquid crystal display unit 200 is opaque at dot regions which are under an active state, but other dot regions are sufficiently transparent. Accordingly, when a spot light is irradiated on the display surface of the display unit 200 by the above-described light pen 20 as shown in FIG. 1, the irradiated spot light is transmitted through the display surface of the liquid crystal display unit 200 and arrives at on the light-receiving surface of the above-described light-position detector 100 in the case that the irradiated position corresponds to a dot region which is not under an active state (this is a usual way of application). The light-position detector 100 generates an electric signal (termed hereinafter position signal) indicating the light-received position (a two-dimensional position on the light-receiving surface) of the received spot light, which signal is output to a position detection circuit 400 in a signal processing unit 30.

The signal processing unit 30 comprises a CPU 300, the position detection circuit 400, a display-unit driving circuit 500, an image memory 600, a timer 700, a program memory

8

800 and an external memory card interface 900. As a first processing function of the signal processing unit 30, the CPU 30 determines the two-dimensional content of a position signal which is input via the position detection circuit 400, and sequentially generates a liquid crystal driving signal via the display-unit driving circuit 500 in order to make dots which are located at corresponding two-dimensional positions on the display surface of the above-described liquid crystal display unit 200 under an active state. On the display surface of the liquid crystal display unit 200, a dot display is thereby performed corresponding to the above-described spot-light irradiated positions on the display surface. That is, in accordance with performing an operation such that the above-described light pen 20 is continuously moved along the display surface of the liquid crystal display unit 200 (for example, an operation of writing a character), dot display is also continuously performed on the display surface, and as a result, an image corresponding to the locus thereof (for example, the character as described above) is displayed on the display surface. Such display information is held in the above-described image memory 600 incorporated within the signal processing unit 30 until a clearing instruction which will be described later is issued. The display information, that is, the image information and control information which are input as

9

described above, is also sequentially output to a network-signal processing unit 40 in the next stage via the CPU 300. The signal processing unit 30 also includes a second processing function while receiving image information (when image information is transmitted from a correspondent in conversation), a third processing function relative to a sequence in an operation room when starting communication and the like, a fourth processing function relative to automatic dialing including preliminary entry processing relative to the name, telephone number and the like of a correspondent, and a fifth processing function relative to a modification of setting of calendar/clock information to be displayed on the liquid crystal display unit 200 together with an operation menu under a normal leaving-alone state. These function will be described later together with an explanation of the network-signal processing unit 40 and a communication control unit 50. Although these functions are executed in accordance with programs stored in the program memory 800, it is also possible to connect an external memory card (not illustrated), in which other function programs are stored, to the CPU 300 via the above-described external memory card interface 900, and thereby it also becomes possible to provide the signal processing unit 30 with other functions in expansion.

The network-signal processing unit 40 is a circuit

10

which mainly performs signal processing between a proper telephone and apparatus of a correspondent (a telephone, modulator-demodulator and the like of a correspondent) which are electrically connected via a communication network (telephone circuit) 3. In the case of transmission, a voice signal which is subjected to voice-electric conversion by a handset 1 and necessary processing, such as amplification and the like, by a well-known voice-signal processing unit 2 and a position signal which is added from the signal processing unit 30 (CPU 300) are properly mixed in a manner that the two signals can be identified. The voice-mixing signal is then sent out to the above-described communication network 3 as, for example, a voice signal which is handled in a polular telephone set. In the case of reception, a voice-mixing signal which is received in the form of a voice signal in the same manner as described above via the communication network 3 is separated into a pure voice signal and the above-described position signal. Operation is performed so that the separated voice signal and position signal are transmitted to the voice-signal processing unit 2 and signal processing unit 30 (CPU 300), respectively. Subsequently, the voice-signal processing unit 2 adds a necessary processing to the voice signal, and the handset 1 performs electrovoice conversion of the processed signal to transmit the voice of the correspondent to the user. In the

11

signal processing unit 30, as the above-described second processing function, if the information transmitted from the correspondent is, for example, image information, the unit 30 determines its two-dimensional content via the CPU 300, and operates so that it sequentially forms liquid crystal driving signals via the display-unit driving circuit 500 in order to make dots which are located at the corresponding two-dimensional positions on the display surface of the above-described liquid crystal display unit 200 under an active state. That is, the image information which has been input at the apparatus of the correspondent is also displayed on the identical liquid crystal display unit 200 of the own apparatus in the same manner as described above. When the apparatus of the embodiment is connected to a general-purpose computer, it is also possible to send various data (exchange rates, stock-price information and the like) prepared in the general-purpose computer to the signal processing unit 30 via a modulator-demodulator (not illustrated) and the communication network 3, and display the content on the liquid crystal display unit 200. Furthermore, when a necessary instruction operation by the light pen 20 is performed according to the content of the data which have been sent as described above, it is also possible to send the instruction data to the general-purpose computer by a route which is inverse to that described above.

12

Such operations by the handset 1, the voice-signal processing unit 2, the input/output panel 10, the signal processing unit 30 and the network-signal processing unit 40, may also be executed in the same manner in the apparatus of the correspondent. Communication of image information, such as characters, figures and the like, together with a voice via the hadnset 1 and the input/output panel 10 thereby becomes also possible. It is to be noted that voice mixing/separation of voice signals and position signals in the network-signal processing unit 40 in the manner as described above can be realized using well-known time-sharing multiplexing technique, frequency multiplexing technique and the like. It is aslo assumed that, in executing an operation relative to such voice mixing/separation and the above-described first and second functions, the above-described network-signal processing unit 40 and signal processing unit 30 are configured so that they can perform independent simultaneous operations, respectively.

The communication control unit 50 is a circuit for mainly performing various controls in order to attempt a logical conclusion (for the purpose of dicriminating from a physical connection state while noncommunication, a connection state between two parties under communication is termed a logical connection, and having such connection state is termed a logical conclusion) with apparatus of a correspon-

13

dent when starting communication after an off-hook of the handset 1. Concretely, the unit 50 executes the following controls and processings together with, for example, the third processing function of the signal processing unit 30. FIG. 3 shows an example of calendar/clock information (generated from the timer 700 within the signal processing unit 30) and guide information (previously stored in a guide information memory 51) indicating operation menus which are to be displayed on the liquid crystal display unit 200 of the above-described input/output panel 10 under a normal leaving-alone state. The following explanation will also refer to FIG. 3.

Now, suppose that the above-described handset 1 becomes under a off-hook state by the user, and "1 dial" in the above-described operation menus is assigned via the above-described light pen 20. Then,

1) the communication control unit 50 judges that the assignment has been performed, and reads from the guide information memory 51 image information relative to a key dial (a well-known key arrangement constituted by ten keys "0" - "9", a "*" key and a "#" key) which has previously been stored in the memory 51, and transfers it to the CPU 300 of the signal processing unit 30 in the form of position signals detected by the above-described light-position detector 100. The CPU 300 thereby clears (this is performed by clear-

14

ing the stored content of the above-described image memory 600) the preceding image (the image illustrated in FIG. 3), and by judging the two-dimensional content relative to each picture element of position signals indicating the image of the key dial, forms liquid crystal driving signals by the display-unit driving circuit 500 in order to make dots which are located at corresponding two-dimensional positions on the display surface of the liquid crystal display unit 200 under an active state. That is, an image of the key dial (not illustrated) is displayed on the liquid crystal display unit 200.

For the displayed key dial image, the user performs a dialing of the telephone number of a desired correspondent by irradiation of a spot light by the light pen 20. In this case, a dialing by a so-called dialing may, of course, be performed.

2) The content of such a dialing is sequentially sent back to the CPU 300 of the signal processing unit 30 as the above-described position signals in the form of detected light-receiving positions by the light-position detector 100 and the position detection circuit 400 of the signal processing unit 30. The CPU 300 further sequentially sends back the content of the dialing to the communication control unit 50 as coordinate information corresponding to such position signals. The communication control unit 50 understands the content of the dialing according to the coordinate information thus sent back, converts the coordinate information into dial information, and transmits it to a switchboard (not illustrated) via the network-signal processing unit 40. It can be well understood from the function of a conventional telephone that the two parties are logically concluded by such operations of the communication control unit 50 unless the desired correspondent is "busy". In this case, when the desired correspondent is "busy", image information relative to a guide word or a symbol indicating that state may be read from the guide information memory 51 (in this case, such image information has previously been entered in the guide information memory 51) as the operation menus and key dial image described above, and its image may be displayed on the liquid crystal display unit 200 via the signal processing unit 30. It is possible to thereby exactly inform the user the "busy" state even when the user is a deaf and dumb person or the like. It is to be noted that the conversation apparatus of the embodiment makes possible communication by writing with a correspondent by the above-described functions of the input/output panel 10, and so can be satisfactorily utilized even by a deaf and dumb person and the like.

3) When a logical conclusion with the desired correspondent is achieved by the above-described operations of the com-

16

munication control unit 50, the communication control unit 50 receives a signal indicating the conclusion from a switchboard (not illustrated) via the network-signal processing unit 40, and then instructs the signal processing unit 30 (the CPU 300) to clear the content of the preceeding dislay (the key dial image). The CPU 300 of the signal processing unit 30 thereby clears the display on the liquid crystal display unit 200 (clears the stored content of the image memory 600), and waits for an input of the image information via the light pen 20 described above.

Subsequently, communication of image information, such as characters, figures and the like, together with a voice via the handset 1 and the input/output panel 10 as described above is performed. When the communication is terminated and the handset 1 is under an on-hook state, then

4) the communication control unit 50 judges the on-hook state, instructs the signal processing unit 30 to clear all the content of display up to that time (input images by the user of the own apparatus and the user of the apparatus of the correspondent), and reads guidance information indicating the preceding operation menu from the guidance-information memory 51 to transmit it to the signal processing unit 30. The signal processing unit 30 thereby clears a display on the liquid crystal display unit 200 up to that time, and operates so that the operation menus and

17

calendar/clock information as shown in FIG. 3 are displayed again on the liquid crystal display unit 200.

By the above procedure, the conversation apparatus of the present embodiment returns to the original state. It is to be noted that, when it is intended to clear a display on the liquid crystal display unit 200 during the above-described communication, a switch or the like (not illustrated) assumed to be disposed on the light pen 20 or the body of the telephone is operated by the user. An instruction to clear the content of the present display on the liquid crystal display unit 200 is thereby issued from the communication control unit 50 to the signal processing unit 30.

In the conversation apparatus of the embodiment shown in FIG. 1, a correspondent-information memory 52 connected to the communication control unit 50 together with the above-described guidance-information memory 51 is a memory in which the names of plural correspondents (parties in conversation) and their telephone numbers are entered corresponding to each other. In the conversation apparatus of the present embodiment, due to an interaction between the above-described fourth processing function and the function of the communication control unit 50, the following operations relative to "entry mode" and "automatic dialing mode" are further executed.

18

\* Entry Mode

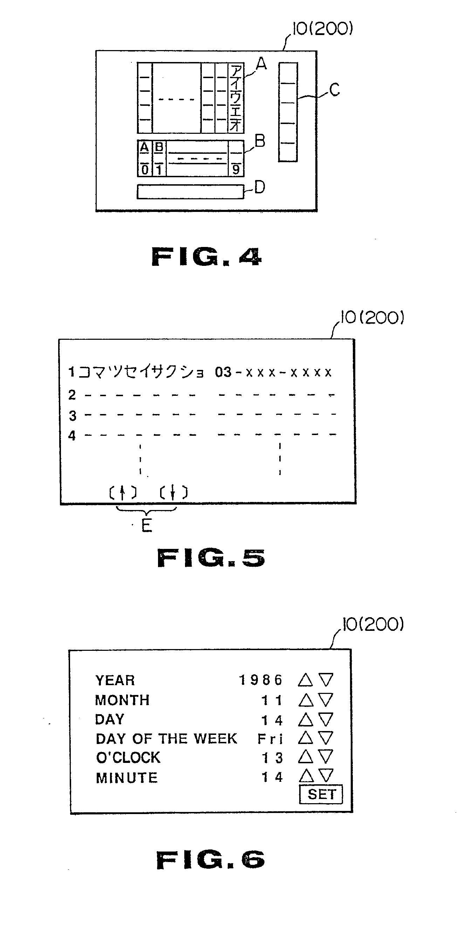

Under a display state of the above-described operation menus (refer to FIG. 3), if the user assigns the position where "3 Entry" is displayed on the input/output panel 10 (the liquid crystal display unit 200) by the light pen 20, the signal processing unit 30 (the CPU 300) detects a light-irradiated position relative to the light-position detector 100 via the position dection circuit 400, acknowledges the selection of the "entry mode" from the light-irradiated position, accesses a predetermined address in the guidance information memory 51 via the communication control unit 50, and reads from the guidance information memory 51 image information corresponding to, for example, an image shown in FIG. 4, which has previously been stored in the memory, to display it on the liquid cystal display unit 200. It is to be noted that, in such alteration of display picture surfaces on the liquid crystal display unit 200, the signal processing unit 30 repeatedly executes a series of the following operations as described above. That is,

1) The image memory 600 clears the content of memory up to that time.

2) While storing image information to be newly transmitted into the image memory 600, the display-unit driving circuit 500 forms liquid-crystal driving signals in order to make dots located at positions corresponding to the image information on the display surface of the liquid crystal display unit 200 under an active state.

3) Subsequently, the liquid-crystal driving signals formed according to the image information stored in the image memory 600 as described above are held. The situation is identical also in the following explanation.

Now, the image illustrated in FIG. 4 comprises a display unit A of 50 characters of the "katakana" (the square Japanese syllabary), an alphabet/number/symbol display unit B, a function-key display unit C and an input display unit D. By successively assigning necessary characters, numbers and the like corresponding to the name and telephone number of a correspondent desired to be entered among these display units A, B and the like by operation of the light pen by the user as described above, the signal processing unit 30 performs input display of the name and telephone number of the correspondent which have been thus assigned. Every time when the input is completed and an "entry key" on the function-key display unit C is operated via the light pen by the user, the information indicating the name and telephone number of the correspondent displayed on the input display unit D is sequentially transferred to the communication control unit 50, and stored into the above-described correspondent-information memory 52, for example, in the form of codes, via the communication control unit 50.

Subsequently, the user can sequentially enter the names and telephone numbers of necessary correspondents in the same manner. It is to be noted that correction or cancellation while the above-described entry is performed via a "correction key" or an "elimination key" also provided in the fuction-key display unit C, and return of the display picture surface to the initial picture surface (FIG. 3) is performed by, for example, double pressings of the "entry key" and the like.

Next, operation while automatic dialing mode will be explained.

## *Automatic Dialing Mode

If "2 automatic dialing" is selected by an operation of the light pen by the user on the initial picture surface (FIG. 3) on which operation menus are displayed, the signal processing unit (the CPU 300) once switches the picture surface to the picture surface identical to that shown in FIG. 4 by the identical processing as described above. Under this display state, if the user directly assigns, for example, a "SET key" provided in the function key C, the CPU acknowledges the assignment and accesses the correspondent-information memory 52 via the communication control unit 50 so that all entry data (the names and telephone numbers of correspondents) entered in the correspondent-information memory 52 are displayed on the liquid crystal display unit

21

200, for example, in the order of the 50 "katakana" characters. Similarly under the display state of the image shown in FIG. 4, if the user assigns, for example, "ユ" amomg the display unit A of the 50 "katakana" characters via the light pen and then the "SET key", the CPU 300 acknowledges the assignment and accesses the correspondent-information memory 52 via the communication control unit 50 so that the names and telephone numbers of correspondents having an initial "ユ" among the data entered in the correspondent-information memory 52 are displayed on the liquid crystal display unit 200, for example, as shown in FIG. 5. In any of these display controls, scroll keys E as illustrated in FIG. 5 are also displayed on a lower portion of the display picture surface, and in accordance with the assigned mode of the scroll key E by the user, the CPU 300 further sequentially scrolls the corresponding portion of the display picture surface upwardly or downwardly. The user can thereby retrieve the desired correspondent for conversation from each assigned display picture surface.

When the user finds out the name of the desired correspondent by either of the above-described operations, the user then assigns the name or telephone number of the correspondent by the light pen. The CPU 300 thereby acknowledges the assigned position in the picture surface via an output of the position detection circuit 400, selects the

22

telephone number of the assigned correspondent from among the entered data in the correspondent-information memory 52 by the recognition, and transfers the telephone-number information back to the communication control unit 50.

The communication control unit 50 converts the telephone-number information transferred from the signal processing unit 30 (the CPU 300) into dial information, and further transfers it to a switchboard (not illustrated) via the network-signal processing unit 40. As in the previous case, the two parties are logically concluded by such operations of the signal processing unit 30 and the communication control unit 50, unless the desired correspondent is "busy". In this case, when the desired correspondent is "busy", the image information relative to a guidance word or a symbol indicating the "busy" state may be read from the guidance information memory 51, and its image may be displayed on the liquid crystal display unit 200 via the signal processing circuit 30 in the same manner as described above.

When a logical conclusion with the desired correspondent is achieved by such operations of the communication control unit 50, the communication control unit 50 receives a signal indicating the logical conclusion from a switchboard (not illustrated) via the network-signal processing unit 40, and thereby instructs the signal processing unit 30 (the CPU 300) to clear the preceding dis-

23

play content (the image indicating the name and telephone number of the correspondent). The CPU 300 of the signal processing unit 30 thereby clears the display of the liquid crystal display unit 200 (clears the stored content of the image memory 600), and waits for an input of image information via the light pen 20.

Thereafter, communication of image information, such as characters, figures and the like, together with a voice via the handset 1 and the input/output panel 10 is performed as described above. When the communication is completed and the handset 1 becomes under an on-hook state, the communication control unit 50 judges this state, instructs the signal processing unit 30 to clear all the display content up to that time (input images by the user of the own apparatus and the user of the apparatus of the correspondent), and also reads the guidance information indicating the preceding operation menu from the guidance information memory 51 to transfer it to the signal processing unit 30. The signal processing unit 30 thereby clears the display on the liquid crystal display unit 200 up to that time and operates so that the operation menus and calendar/clock information as shown in FIG. 3 are displayed again on the liquid crystal display unit 200 as described above.

By the above-described procedure, the conversation apparatus of the embodiment returns to the initial state. In

24

the case of the "automatic dialing mode", the apparatus may be configured such that, by the assignment of the "2 automatic dialing" from the operation menus (FIG. 3), the registered information as shown in FIG. 5 is directly displayed in the order of, for example, the 50 "katakana" characters without via the picture surface as that shown in FIG. 4.

In the apparatus of the present embodiment, the timer 700 disposed in the signal processing unit 30 performs timing operations for displaying "year", "month", "day", "day of the week", "o'clock" and "minute" as the above-described calendar/clock information. As the above-described fifth processing function of the signal processing unit 30, the apparatus of the embodiment can arbitrarily perform setting, alteration and the like of the calendar/clock information displayed on the liquid crystal display unit 200 together with the operation menus via the light pen 20.

That is, if the user assigns "4 clock setting" from the operation menus (FIG. 3) by operation of the light pen in the same manner as described above, the CPU 300 acknowledges the assignment and fixedly displayed the calender/clock information at that time by an image content as shown, for example, in FIG. 6. Under this display state, if the user assigns an up-key "Δ" corresponding to the line of "year" by the light pen 20, the CPU 300 detects the assignment by an output of the position detection circuit 400, and sequentially performs an incremental display from the display "1986" of the "year" while the light pen 20 continues to assign the upkey "△" for the "year". On the contrary, if an down-key "▽" is assigned by the light pen 20, a discremental display is sequentially performed from the display "1986". When the CPU 300 confirms that the assignment by the light pen is turned off, it stops the incremental or discremental display. As a result, on the line of the "year", a number which is displayed when the light pen 20 is turned off is fixedly displayed.

It is also possible to set "month", "day", "day of the week", "o'clock" and "minute" by a similar function via a similar operation. Finally, when the user assigns a "SET key" on the picture surface shown in FIG. 6 by the light pen, the CPU 300 renews the timing content of the timer 700 by each of data for the "year", "month", --- , "minute" which are displayed at that time, starts again the timer 700, and performs a processing for returning the picture surface of the liquid crystal display unit 200 to the picture surface which displays the above-described operation menus (FIG. 3). The timer 700 thereby resumes timing operation from the renewed content, and calendar/clock information from the renewed content is displayed again on the liquid crystal display unit 200 together with the operation menus.

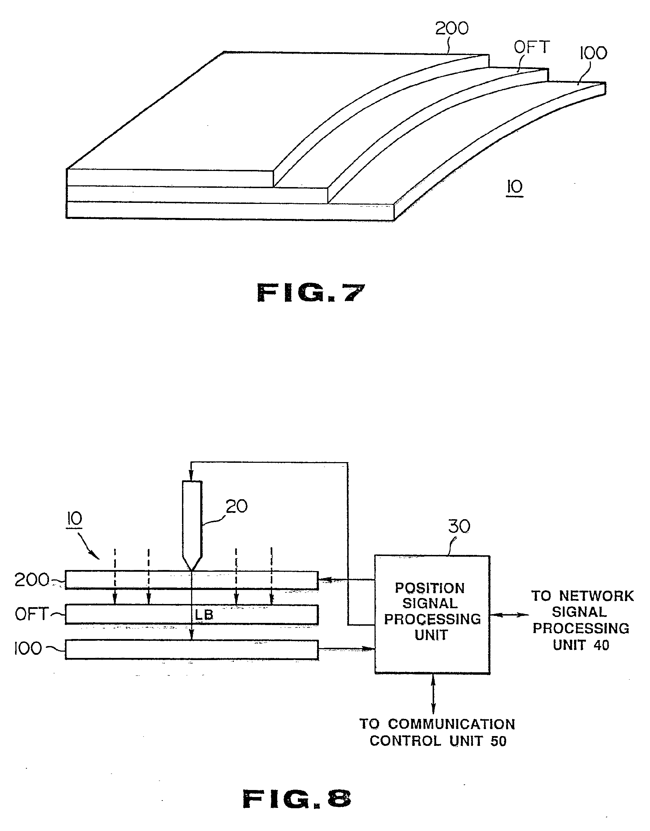

Next, a concrete structure of the above-described input/output panel 10 will be described in detail with reference to FIGS. 7 through 10.

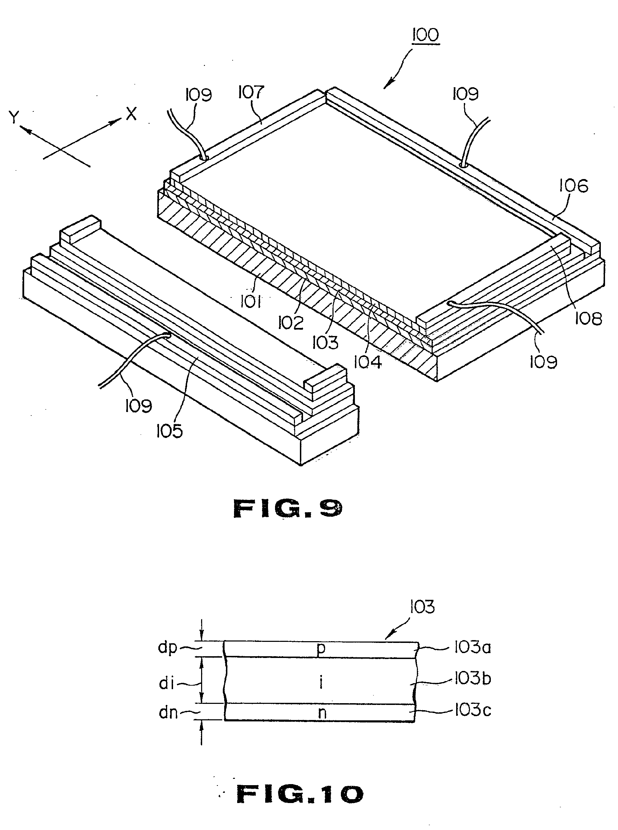

The input/output panel 10 has, in gross, a three-layered structure in which an optical filter (made of, for example, a red acrylic plate or glass plate) OFT is inserted between the light position detector 100 and the liquid crystal display unit 200, as shown in FIG. 7. The optical filter OFT has a function such that the so-called noise light other than the light LB emitted from the light pen 20 is obturated as shown in FIG. 8. Occurrence of a wrong input and the like due to the noise light can thereby be satisfactorily prevented.

The light position detector 100 comprises a resistive layer 102 consisting of a conductive layer formed on a substrate 101 consisting of a glass or the like by a sputtering method or a vacuum deposition method, as shown in FIG. 9. A semiconductive layer 103 which functions as a photoelectric conversion layer is also formed on the upper surface of the resistive layer 102, and a resistive layer 104 consisting of a transparent conductive film is further formed on the upper surface of the layer 103 in the same manner as that for the above-described resistive layer 102. The thicknesses of the resistive layers 102 and 104 are set to, for example, about

1000 Å.

The semiconductive layer 103 has a three-layered structure which consists of a p-type amorphous-silicon layer (termed hereinafter a p-layer) 103a, an i-type amorphous-silicon layer (termed hereinafter an i-layer) 103b and an n-type amorphous-silicon layer (termed hereinafter an n-layer) 103c.

The p-, i-, and n-layers constituting the semiconductive layer 103 are formed by a glow-discharge decomposed CVD (chemical vapor deposition) method or the like, and in the present embodiment, the thicknesses dp, di and dn of these layers are set to about $dp \doteqdot 100 - 300$ Å, $di = 4000 - 6000$ Å and $dn = 300 - 500$ Å.

At both ends of the resistive layer 102, a pair of rod-like X-direction current-collecting electrodes 105 and 106 are opposedly disposed, and similarly at both ends of the resistive layer 104, a pair of Y-direction current-collecting electrodes 107 and 108 are opposedly disposed. Lead wires 109 for taking out current are connected to central portions of these current-collecting electrodes 105 – 108, respectively. As a material for these current-collecting electrodes 105 – 108, aluminum, an aluminum alloy or the like is used.

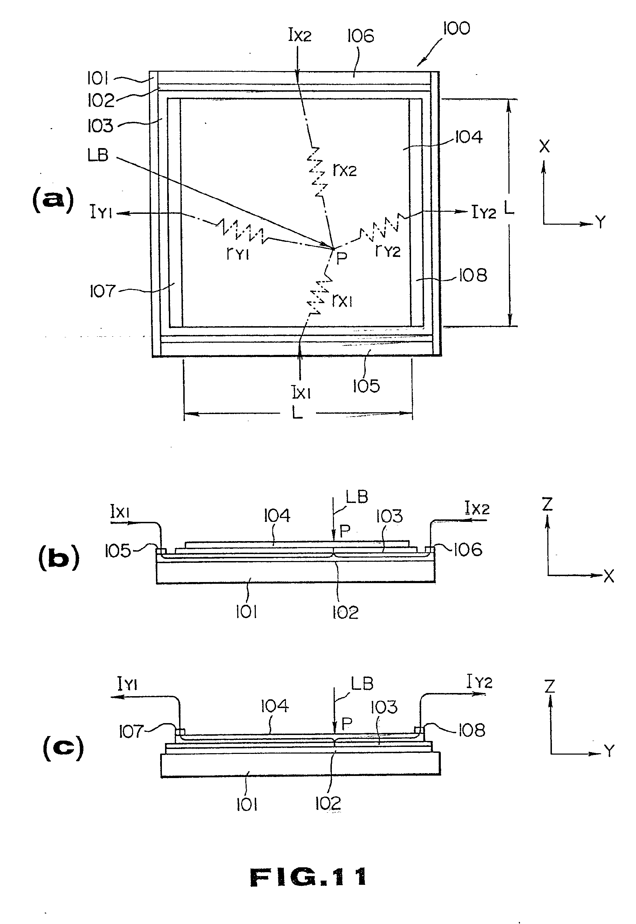

The light position detector 100 functions as follows. That is, as shown in FIGS. 11(a), 11(b) and 11(c), when a light beam LB is projected on the light position detector, a photocurrent is generated at the incident position P due to a photovoltaic function of the semiconductive layer 103 functioning as the above-described photoelectric conversion layer. At this time, in the resistive layer 102, the above-described current is divided by resistances $r_{x1}$ and $r_{x2}$ between the incident position P and the electrodes 105 and 106, and in the resistive layer 104, the above-described current is divided by resistances $r_{y1}$ and $r_{y2}$ between the incident position P and the electrodes 107 and 108. Hence, currents $I_{x1}$ and $I_{x2}$ and currents $I_{y1}$ and $I_{y2}$ are taken out from the electrodes 105 and 106 and the electrodes 107 and 108, respectively. These currents correspond to the above-described position signals. In FIG. 11(a), a letter L indicates the full scale (for example, 8 cm) of the detection range in the light position detector 100.

It is to be noted that the present light position detector 100 using an amorphous semiconductor (amorphous silicon in the present embodiment) for the semiconductive layer 103 has the advantage that it can be formed in a larger area (for example, 100 mm x 100 mm) compared with a light position detector using a single crystal, and is very effective as a light position detector applied to the above-described input/output panel 10. However, when it is permitted that the area of the input/output panel 10 is small,

29

a light position detector using a single crystal silicon as described above can also be applied.

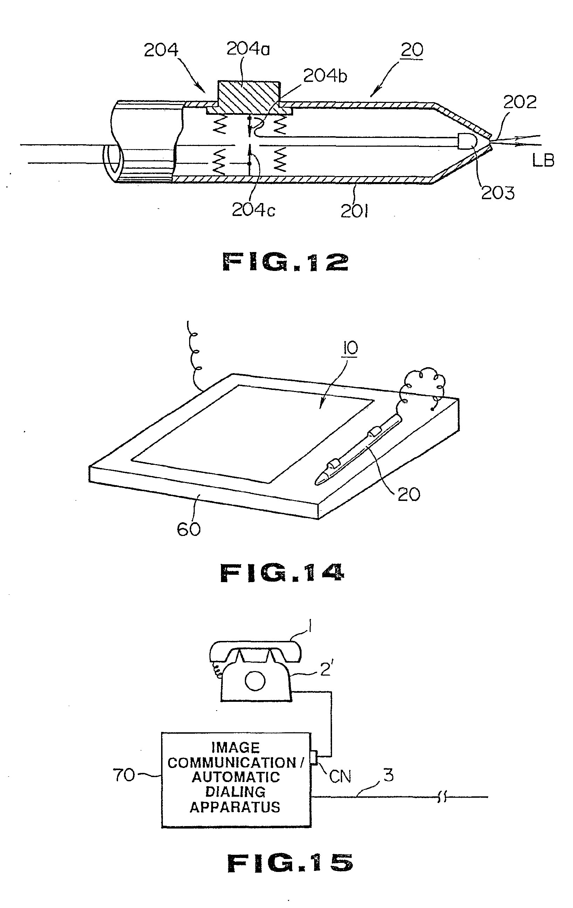

As shown in FIG. 12, the above-described light pen 20 has an opening 202 at a front end portin of its penholder 201, and a light-emitting device 203, such as an LED and the like, is disposed in such a way that it is close to the opening. In the midsection of the penholder 201, there is provided a push-button switch 204a so that its push button 204a protrudes outwardly from the penholder. The push-button switch 204 is closed by the contact between contacts 204b and 204c when the push button 204a is pressed. A transference of an electric signal applied from the outside (the signal processing unit 30) to the light-emitting device 203 is thereby performed.

FIG. 13 shows an example of the position detection circuit 400 disposed within the above-described signal processing unit 30.

The position detection circuit 400 comprises an oscillator 401, an output of which is subjected to current amplification in current in the current amplifier 402, and then added to the light-emitting device 203 via the above-described push-button switch 204 of the light pen 20. Consequently, the light-emitting device 203 is lit by the closing of the push-button switch 204. Under this state, if the front end of the light pen 20 is situated on the optical filter OFT as shown in FIG. 8, the light beam (a spot light) LB from the light-emitting device 203 is projected on the light-receiving surface of the light position detector 100 via the filter OFT.

As a result, the divided currents (position signals) $I_{x1}$, $I_{x2}$, $I_{y1}$ and $I_{y2}$ corresponding to the light incident position are output from the light position detector 100 as described above. These currents are converted into corresponding voltage signals X1, X2, Y1 and Y2 by current-voltage conversion circuits 403, 404, 405 and 406, respectively, and then input to synchronous detection circuits 411, 412, 413 and 414 via amplifiers 407, 408, 409 and 410, respectively.

The synchronous detection circuits 411 - 414 input the output of the above-described oscillator 401 as a synchronous signal, and perform a function of outputting only signals which are in synchronization with the synchronous signal. The signals X1, X2, Y1 and Y2 based on the light from the light-emitting device 203 are in synchronization with the output signal of the oscillator 401. Hence, only the signals X1, X2, Y1 and Y2 are detected in and output from the synchronous detection circuits 411 - 414, respectively. That is, it is possible to attenuate disturbing light, such as illuminating light by a fluorescent lamp and the like, by the above-described optical filter

31

OFT, and even if the disturbing light nevertheless reaches the light-receiving surface of the light position detector 100, signals according to the disturbing light are effectively cut off by the detection function of the synchronous detection circuits 411 - 414.

The signal X1 which has been output from the synchronous detection circuit 411, the signal X2 which has been output from the synchronous detection circuit 412, the signal Y1 which has been output from the synchronous detection circuit 413 and the signal Y2 which has been output from the synchronous detection circuit 414 are added to an input terminal for minuends of a subtraction circuit 415 and an input terminal for augends of an addition circuit 416, an input terminal for subtrahends of a subtraction circuit 415 and an input terminal for addends of an addition circuit 416, an input terminal for minuends of a subtraction circuit 417 and an input terminal for augends of an addition circuit 418, and an input terminal for subtrahends of a subtraction circuit 417 and an input terminal for addends of an addition circuit 418, respectively.

As a result, signals X1 - X2 and X1 + X2 are output from the subtraction circuit 415 and the addition circuit 416, respectively, and these signals are input to a division circuit 419. Furthermore, signals Y1 - Y2 and Y1 + Y2 are output from the subtraction circuit 417 and the addition

32

circuit 418, respectively, and these signals are input to a division circuit 420.

From the division circuits 419 and 420, analog signals $X = (X1 - X2)/(X1 + X2)$ and $Y = (Y1 - Y2)/(Y1 + Y2)$ which indicate the coordinate $(X, Y)$ of the above-described light incident position are output, respectively. These signals are alternately input to an A/D converter 422 by a multiplexer 421 and converted into digital signals $D_X$ and $D_Y$. The output signals $D_X$ and $D_Y$ of the A/D converter 422 are input to the above-described CPU 300 via an interface circuit 423. The CPU 300 achieves the above-described first through fifth processing functions according to the signals $D_X$ and $D_Y$ (that is, coordinate information) thus obtained.

Although, in the above-described embodiment, the key dial image is displayed on the liquid crystal display unit 200 by the above-described third processing function of the signal processing unit 30, and the telephone number of a desired correspondent is dialed via operation of the light pen, the key dial may be separately provided in a part of the body of a telephone set or the handset 1 as in a well-known conventional telephone.

Furthermore, although, in the present embodiment, as is apparent from having assumed the above-described key dial, it has been assumed to send out a so-called push-button (PB) signal consisting of a combination of two voice signals to the network 3 when performing the dialing, the apparatus may also be configured such that a so-called dial-pulse (DP) signal consisting of pulses the number of which corresponds to the assigned number is sent out to the network 3, especially in the above-described "automatic dialing mode" and the like.

Furthermore, although, in the above-described embodiment, the apparatus is configured such that the communication of image information together with a voice via the input/output panel 10 is possible in any time during conversation by the above-described first or second processing functions of the signal processing unit 30, this function may also be separately provided as an exclusive mode, for example, "memo communication mode" and the like. That is, in this case, an item relative to the "memo communication" has previously been added in the above-described operation menus (refer to FIG. 3) which are initially displayed on the input/output panel 10 (the liquid crystal display unit 200). When this item is assigned via operation of the light pen by the user (irrespective of while conversation or while non-conversation), the input/output panel 10 (the liquid crystal display unit 200) is switched to a state in which an image can be input.

Relative to the communication of such image information, the apparatus may also be, for example, otherwise

34

configured such that a "transmission key", a "reception key" and the like are also displayed on a part of the input/output panel 10, and by the very operation of the light pen for one of these displayed keys, the corresponding input image is transmitted or received.

Relative to the above-described fourth processing function of the signal processing unit 30, although, in the above-described embodiment, information about correspondents (the names and telephone numbers of correspondents) is entered via the correspondent-information memory 52 for which a memory freely capable of write and read, such as a RAM, is assumed, and the entered data are read as a list of names, the apparatus may be configured such that such information about correspondents is also entered in an external memory card as well, which is connected via the above-described external memory card interface 900, other than the correspondent-information memory 52 for the purpose of preparing for increase of the entered data. Furthermore, the memory 52 may be configured by an EP-ROM, and entered data may be written not by the CPU as in the above-described embodiment, but by an EP-ROM-write apparatus.

Furthermore, when there are indispensable registered data for which an entry is impossible, the apparatus may also be configured such that the names and dial numbers of correspondents corresponding to the indispensable entered

35

data have previously been stored in another ROM, and entered data capable of entry which are arbitrarily input from the user are stored in a RAM and the like provided separately from the ROM.

Moreover, if there is additionally provided a switch which has the communication control unit 50 simulately detect and judge to become under a on-hook state (so to speak, an on-hook switch) according to a simple pressing operation and the like in a part of the body of a telephone as shown in FIG. 2, operationability when starting communication becomes improved.

Furthermore, although, in the above-described embodiment, the liquid crystal display unit 200 is disposed overlapped at an upper portion of the light position detector 100, it is also possible to dispose the liquid crystal display unit 200 at a lower portion of the light position detector 100, contrary to the case of the embodiment. In this case, however, since the light position detector 100 is necessarily transparent, a transparent material, such as a glass and the like, must be used as the substrate 101 , and both of the resistive layers 102 and 104 must be formed by transparent conductive films.

Although, in the light position detector 100 used in the above-described embodiment, the X-direction current-collecting electrodes 105 and 106 are provided at the resis-

tive layer 102, and the Y-direction current-collecting electrodes 107 and 108 are provided at the resistive layer 104, common electrodes may be provided at one resistive layer, and X-direction and Y-direction current-collecting electrodes may be provided at another resistive layer. Although in the embodiment, the light position detector 100 is disposed so that the side of the resistive layer 104 is the light-receiving surface, the light position detector 100 may also be disposed so that the side of the substrate 101 is the light-receiving surface. In this case, there is provided the advantage that the substrate 101 and the resistive layer 102 can be functioned as optical filters.

Furthermore, although, in the above-described embodiment, the liquid crystal display unit 200 is used as a plate-like display unit, it is also possible to adopt various other kinds of display units, such as matrix electroluminescence displays (ELP), matrix plasma displays (PDP), matrix hot-cathode-ray displays (VED), electrochromic displays (ECD) and the like.

Although, in the embodiment, the light-emitting device 203 is lit operating the push-button switch 204 provided at the light pen 20, it is possible to automatically light the light-emitting device 203 only when performing hand writing, by providing a switch which is actuated by the writing pressure of the light pen at a front end portion of the light

37

pen 20 to light the light-emitting device 203 by this switch.

Furthermore, although, in the above-described embodiment, the input/output panel 10 and the light pen 20 are disposed at the body of a telephone as shown in FIG. 2, the inout/output panel 10 and the light pen 20 may also be mounted to a case 60 which is different from the body of the telephone, and the case 60 may be connected to the body of the telephone which comprises the handset 1, the voice-signal processing unit 2, the signal processing unit 30, the network-signal processing unit 40, the communication control unit 50, the guide information memory 51, the correspondent-information memory 52 and the like.

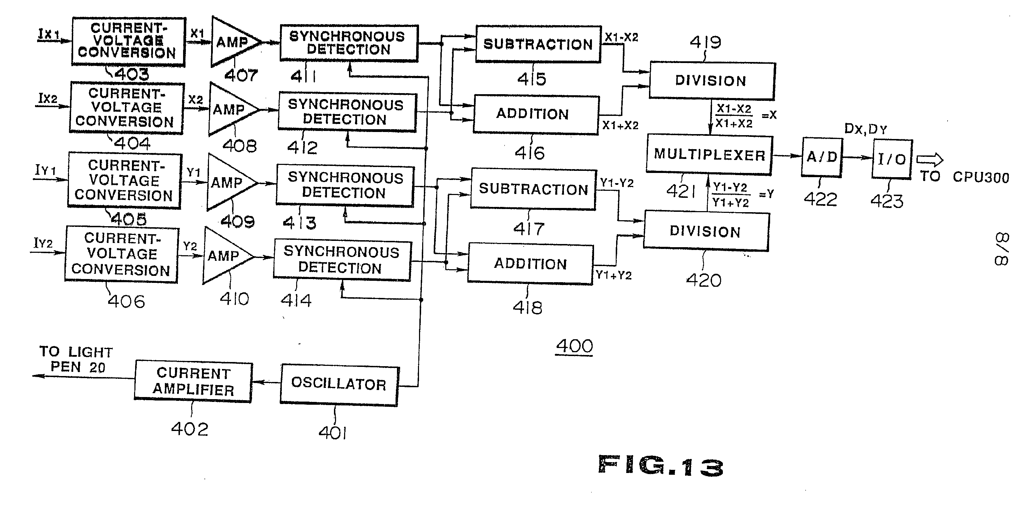

Moreover, if the main unit of the conversation apparatus of the above-described embodiment comprising the input/output panel 10, the light pen 20, the signal processing unit 30, the network signal processing unit 40, the communication control unit 50, the guide information memory 51 and the correspondent-information memory 52 is made an independent image communication/automatic dialing apparatus 70 as shown in FIG. 15, and a connector CN capable of connecting a normal telephone at least provided with a handset and a voice-processing unit from the outside is provided at the apparatus 70, it is possible to provide such a normal telephone with an image communication function and an

38

automatic dialing function by connecting the normal telephone not having the image communication function and the automatic dialing function to the image communication/automatic dialing apparatus 70 via the connector CN.

## Industrial Applicability

By a conversation apparatus according to the present invention, it is possible to perform communication of information, such as characters, figures and the like, as well as normal conversation by a voice. Hence, it is possible to have a correspondent precisely and promptly understand, for example, a route or the form of a substance. In the case of a deaf and dumb person and the like, a conversation by writing with a correspondent becomes possible. Furthermore, according to the present invention, it is possible to provide a conversation apparatus capable of communicating images which is extremely compact in size and inexpensive, without a need for recording paper and a feeding mechnism of the paper as in the case of a facsimile. Operation of the apparatus is also simple. If connected to a general-purpose computer via a communication network, the apparatus can also be used for data terminal operation, such as data-base retrieval and the like.

It is to be noted that the present invention can, of course, be applied not only to a general telephone circuit, but also to a conversation network in a firm and the like.

Claims

1. A conversation apparatus having a handset for performing a conversation with a correspondent, for transferring a voice signal subjected to a voice-electric conversion at the handset to the correspondent and having the handset perform an electro-voice conversion a voice signal transferred from the correspondent, characterized in that it comprises:

a light pen for emitting a spot light;

tablet-type input means for inputting a predetermined information according to an irradiation of the spot light emitted from said light pen upon a plate-like light receiving surface;

first signal processing means for converting the information input to said input means into a predetermined electric signal corresponding to the information; and

second signal processing means for mixing the signal converted by said processing means and said voice signal in a manner so that these two signals can be identified, and transferring the mixed signal to the correspondent.

2. A conversation apparatus according to Claim 1, wherein the predetermined information input to said input means is image information, such as a character, a figure and the like, corresponding to an irradiated locus of said spot light.

3. A conversation apparatus according to Claim 1, wherein the predetermined information input to said input means is image information, such as a character, a figure and the like, corresponding to an irradiated locus of said spot light and identifying information, such as a numerical value and the like, corresponding to an irradiated position of the said spot light.

4. A conversation apparatus according to Claim 2 or 3, wherein said input means is a two-dimensional semiconductive light position detector comprising:

a photoelectric conversion layer consisting of an amorphous semiconctor;

a transparent first resistive layer formed having a predetermined electric resistance at the side of a light receiving surface of said photoelectric conversion layer;

a second resistive layer formed having a predetermined electric resistance at the side of another light receiving surface of said photoelectric conversion layer; and

a pair of current-collecting electrodes disposed at the first and the second resistive layers, respectively, and for collecting photoelectric conversion signals in the X-direction and the Y-direction of said photoelectric conversion layer, respectively.

5. A conversation apparatus according to Claim 1 further comprising:

third signal processing means for separating the mixed signal transferred from the correspondent into said voice signal and the signal corresponding to said input information;

fourth signal processing means for converting the signal corresponding to said input information separated at said third signal processing means and the signal converted at said first signal processing means into a predetermined image information corresponding to these signals; and

display means for visually displaying said converted image information when necessary.

6. A conversation apparatus according to Claim 5, wherein said input means is a two-dimensional semiconductive light position detector, and said display means is a plate-like display unit having a display surface the size of which is identical to the light receiving surface of the light position detector and overlapped on the light receiving surface, and at least one of these components is transparent.

43

7. A conversation apparatus according to Claim 6, wherein the predetermined information input to said input means is image information, such as a character, a figure and the like, corresponding to an irradiated locus of said spot light.

8. A conversation apparatus according to Claim 6, wherein the predetermined information input to said input means is image information, such as a character, a figure and the like, corresponding to an irradiated locus of said spot light and identifying information, such as a numerical value and the like, corresponding to an irradiated position of said spot light.

9. A conversation apparatus according to Claim 7 or 8, wherein

said first signal processing means sequentially forms a signal corresponding to a two-dimensional coordinate indicating an input position of the input information on said light receiving surface, as a predetermined electric signal corresponding to said input information; and

said fourth signal processing means sequentially forms a driving signal for making a coordinate point on a display surface of said display means in accordance with a coor-

44

dinate indicated by these signals under an active state as said predetermined image information.

10. A conversation apparatus according to Claim 6, wherein said two-dimensional semiconductive light position detector comprises:

a photoelectric conversion layer consisting of an amorphous semiconductor;

a transparent first resistive layer formed having a predetermined electric resistance at the side of a light receiving surface of said photoelectric conversion layer;

a second resistive layer formed having a predetermined electric resistance at the side of another surface of said photoelectric conversion layer; and

a pair of current collecting electrodes disposed at said first and second resistive layers, respectively, and for collecting photoelectric conversion signals in the X-direction and the Y-direction of said photoelectric conversion layer, respectively.

11. A conversation apparatus according to Claim 6 further comprising:

memory means for entering the names and telephone numbers of plural correspondents in a manner corresponding to one another;

fifth signal processing means for displaying the names and telephone numbers of the plural correspondents entered in said memory means on said display means; and

sixth signal processing means for selecting a predetermined telephone number among the data entered in said memory means according to a detected output of said light position detector, and performing an automatic dialing of said selected telephone number.

12. A conversation apparatus according to Claim 11, wherein said input means, display means and first through sixth signal processing means are constituted in one case, and connection means for connecting a telephone from the outside is provided at the case.

13. A conversation apparatus according to Claim 11 further comprising:

timing means for timing a time; and

seventh signal processing means for performing a time setting of said timing means according to a detected output of said light position detector.

14. A conversation apparatus according to Claim 13, wherein said seventh signal processing means performs an incremental display or a discremental display of time data displayed on said display means while said light pen is kept turned on according to a detected output of the light position detector.

15. A conversation apparatus according to Claim 11 further comprising:

interface means to which an external memory card is removably connected as an external auxiliary memory; and wherein

an expansion of functions including an expansion of an entered area in said memory means is intended via an external memory card connected to said interface means.

FIG.1

LIGHT PEN 20

10
200

LIQUID CRYSTAL DISPLAY

LIGHT POSITION DETECTOR

100

VOICE SIGNAL PROCESSING 2

1

SIGNAL PROCESSING UNIT

TIMER 700

500 DISPLAY DRIVER

300
30

POSITION DETECTION 400

IMAGE MEMORY 600

CPU

PROGRAM MEMORY 800

EXTERNAL MEMORY CARD INTERFACE 900

NETWORK SIGNAL PROCESSING UNIT 40

3

CORRESPONDENT APPARATUS

50

GUIDE INFORMATION MEMORY 51

CORRESPONDENT INFORMATION MEMORY 52

COMMUNICATION CONTROL UNIT

MANUAL CLEARING INSTRUCTION

1/8

0338075

**FIG.2**

| | |
|---|---|
| 1986  11 . 14  Fri  13 : 14 | |
| 1  DIAL | |
| 2  AUTOMATIC  DIALING | |
| 3  ENTRY | |
| 4  TIME  SETTING | |

10(200)

**FIG.3**

10(200)

**FIG.4**

10(200)

1コマツセイサクショ 03-x x x-x x x x
2 - - - - - - - - - - - - -
3 - - - - - - - - - - - - -
4 - - - - - - - - - - - - -

(↑)　(↓)

E

**FIG.5**

10(200)

| YEAR | 1986 | △ ▽ |
| MONTH | 11 | △ ▽ |
| DAY | 14 | △ ▽ |
| DAY OF THE WEEK | Fri | △ ▽ |
| O'CLOCK | 13 | △ ▽ |
| MINUTE | 14 | △ ▽ |
| | | SET |

**FIG.6**

**FIG.7**

**FIG.8**

0338075

**FIG.9**

**FIG.10**

**FIG.11**

204    204a    204b    20    202

LB

204c    201    203

**FIG.12**

10

20

60

**FIG.14**

1

2'

70    IMAGE
COMMUNICATION /
AUTOMATIC
DIALING
APPARATUS    CN    3

**FIG.15**

FIG.13

# INTERNATIONAL SEARCH REPORT

International Application No    PCT/JP87/00608

**I. CLASSIFICATION OF SUBJECT MATTER** (if several classification symbols apply, indicate all) 3

According to International Patent Classification (IPC) or to both National Classification and IPC

Int.Cl$^4$    H04M11/00, 11/06, G08C21/00

**II. FIELDS SEARCHED**

Minimum Documentation Searched 4

| Classification System 1 | Classification Symbols |
|---|---|
| IPC | H04M11/00, 11/06, G08C21/00, H04M1/276, G04G1/00, 9/00, G06F3/023, 3/033 |

Documentation Searched other than Minimum Documentation
to the Extent that such Documents are Included in the Fields Searched 5

| | |
|---|---|
| Jitsuyo Shinan Koho | 1971 - 1986 |
| Kokai Jitsuyo Shinan Koho | 1971 - 1986 |

**III. DOCUMENTS CONSIDERED TO BE RELEVANT** 14

| Category * | Citation of Document, 16 with indication, where appropriate, of the relevant passages 17 | Relevant to Claim No. 18 |
|---|---|---|
| A | JP, A, 56-25864 (Nippon Telegraph & Telephone Public Corporation) 12 March 1981 (12. 03. 81) Column 2, lines 3 to 6, Figs. 1 to 4 (Family: none) | 1, 5 |
| Y | JP, A, 52-134319 (Nippon Telegraph & Telephone Public Corporation) 10 November 1977 (10. 11. 77) Column 9, lines 8 to 19, Figs. 1, 2, 4 (Family: none) | 1-10, 12 |
| Y | JP, A, 59-100947 (Pioneer Electronic Corporation) 11 June 1984 (11. 06. 84) Column 5, line 10 to column 6, line 18, Figs. 1 to 2 (Family: none) | 1-10 |
| Y | JP, A, 58-87673 (Matsushita Electric Ind. Co., Ltd.) 25 May 1983 (25. 05. 83) | 4-10 |

* Special categories of cited documents: 15

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search 2 | Date of Mailing of this International Search Report 2 |
|---|---|
| October 12, 1987 (12. 10. 87) | October 19, 1987 (19. 10. 87) |

| International Searching Authority 1 | Signature of Authorized Officer 20 |
|---|---|
| Japanese Patent Office | |

Form PCT/ISA/210 (second sheet) (October 1977)

International Application No. PCT/JP87/00608

**0338075**

| FURTHER INFORMATION CONTINUED FROM THE SECOND SHEET | |
|---|---|
| Column 2, line 5 to column 4, line 13, Figs. 1 to 2 (Family: none) | |
| Y    JP, U, 54-6014 (Toshiba Corp.) 16 January 1979 (16. 01. 79) Column 1, Fig. 3 (Family: none) | 11 |
| Y    JP, A, 61-66459 (Nippon Telegraph & Telephone Public Corporation) 5 April 1986 (05. 04. 86) Column 11, line 7 to column 14, line 3, Figs. 1 to 3 (Family: none) | 11 |

**V.☐ OBSERVATIONS WHERE CERTAIN CLAIMS WERE FOUND UNSEARCHABLE [10]**

This international search report has not been established in respect of certain claims under Article 17(2) (a) for the following reasons:

1.☐   Claim numbers_____ because they relate to subject matter [12] not required to be searched by this Authority, namely:

2.☐   Claim numbers_____ because they relate to parts of the international application that do not comply with the prescribed requirements to such an extent that no meaningful international search can be carried out [13], specifically:

**VI.☐ OBSERVATIONS WHERE UNITY OF INVENTION IS LACKING [11]**

This International Searching Authority found multiple inventions in this international application as follows:

1.☐   As all required additional search fees were timely paid by the applicant, this international search report covers all searchable claims of the international application.

2.☐   As only some of the required additional search fees were timely paid by the applicant, this international search report covers only those claims of the international application for which fees were paid, specifically claims:

3.☐   No required additional search fees were timely paid by the applicant. Consequently, this international search report is restricted to the invention first mentioned in the claims; it is covered by claim numbers:

4.☐   As all searchable claims could be searched without effort justifying an additional fee, the International Searching Authority did not invite payment of any additional fee.

Remark on Protest
  ☐   The additional search fees were accompanied by applicant's protest.
  ☐   No protest accompanied the payment of additional search fees.

0338075

| | | | |
|---|---|---|---|
| FURTHER INFORMATION CONTINUED FROM THE SECOND SHEET | | | |
| Y | JP, U, 59-115382 (Osaki Denki Kogyo Kabushiki Kaisha) 3 August 1984 (03. 08. 84) Figs. 2, 5 (Family: none) | | 13 |
| A | JP, U, 61-8335 (Yazaki Corp.) 18 January 1986 (18. 01. 86) Fig. 5 (Family: none) | | 14 |
| Y | JP, A, 61-96852 (Omron Tateisi Electronics Co.) 15 May 1986 (15. 05. 86) Column 1, Fig.4 (Family: none) | | 15 |

**V.☐ OBSERVATIONS WHERE CERTAIN CLAIMS WERE FOUND UNSEARCHABLE**[10]

This international search report has not been established in respect of certain claims under Article 17(2) (a) for the following reasons:

1.☐ Claim numbers_____ because they relate to subject matter [12] not required to be searched by this Authority, namely:

2.☐ Claim numbers_____ because they relate to parts of the international application that do not comply with the prescribed requirements to such an extent that no meaningful international search can be carried out [13], specifically:

**VI.☐ OBSERVATIONS WHERE UNITY OF INVENTION IS LACKING**[11]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (October 1981)